# NEUE EUROPÄISCHE PATENTSCHRIFT

(11) **EP 1 947 540 B2**
(45) Veröffentlichungstag und Bekanntmachung des Hinweises auf die Entscheidung über den Einspruch: **14.12.2011**
(45) Hinweis auf die Patenterteilung: 17.09.2008
(21) Anmeldenummer: 07000979.0
(22) Anmeldetag: 17.01.2007
(51) Int. Cl.: G05B 19/418, G05B 19/04, G06F 11/14

(54) **Verfahren zur Speicherung und Reproduktion eines Zustands in einem Automatisierungsgerät**
Method for backing up and restoring a state in an automation device
Procédé destiné à la sauvegarde et la reproduction d'un état dans un appareil d'automatisation

(43) Veröffentlichungstag der Anmeldung: 23.07.2008
(73) Patentinhaber: SIEMENS AKTIENGESELLSCHAFT, 80333 München (DE)
(72) Erfinder: Fusslein, Wolfgang, 76879 Essingen (DE); Kohl, Frederic, 67630 Neewiller (FR)

(56) Entgegenhaltungen:
- EP-A- 1 244 015
- EP-A- 1 385 070
- US-A- 4 291 388
- US-A1- 2003 046 034
- DATABASE WPI Week 200717 Derwent Publications Ltd., London, GB; AN 2007-168979 XP002436963 -& KR 2006 068 582 A (HYUNDAI MOTOR CO LTD) 21. Juni 2006 (2006-06-21)

## Beschreibung

Die Erfindung betrifft ein Verfahren zum Betrieb eines zur Ausführung eines Steuerungsprogramms zur Steuerung und/oder Überwachung eines technischen Prozesses vorgesehenen Automatisierungsgerätes. Während des Verfahrens ist das Automatisierungsgerät mit einem anderen Automatisierungsgerät, im Folgenden zur Unterscheidung als Bediengerät bezeichnet, kommunikativ verbunden. Auf diese Art und Weise können zwischen Automatisierungsgerät und Bediengerät Daten, z. B. Daten in Bezug auf das Steuerungsprogramm oder Daten in Bezug auf den technischen Prozess, insbesondere ein so genanntes Prozessabbild oder Teile desselben, ausgetauscht werden.

Derartige Automatisierungsgeräte sowie das oben skizzierte Verfahren zum Betrieb eines solchen Automatisierungsgerätes sind an sich bekannt. Die Anmelderin bietet unter der Marke SIMATIC derartige Automatisierungsgeräte, die zur Verwendung in dem eingangs skizzierten Verfahren geeignet und vorgesehen sind, an.

Bei der Wartung oder Inbetriebnahme von Automatisierungslösungen und davon umfassten Steuerungsprogrammen zur Steuerung und/oder Überwachung technischer Prozesse oder zur Fehlerdiagnose wäre es wünschenswert, wenn Zustände eines Automatisierungsgerätes exakt wieder herstellbar wären. Als Problem ergibt sich in diesem Zusammenhang allerdings, dass zwar alle Bestandteile des jeweiligen Steuerungsprogramms, insbesondere die davon umfassten so genannten Bausteine, also Operationsbausteine, Funktionsbausteine und dergleichen, zwar problemlos in ein Automatisierungsgerät geladen werden können, aber Daten, die einen momentanen Zustand des Steuerungsprogramms und/oder des technischen Prozesses repräsentieren, nur für einen lesenden Zugriff verfügbar sind.

Innerhalb der unter der Marke SIMATIC angebotenen Produktfamilie von Automatisierungsgeräten ist für einen solchen lesenden Zugriff eine so genannte Systemzustandsliste vorgesehen, die den aktuellen Zustand des Automatisierungsgerätes beschreibt. Der Inhalt der Systemzustandsliste kann durch Auskunftsfunktionen nur gelesen, nicht aber geändert werden. Von der Systemzustandsliste umfasste Teillisten sind dabei virtuelle Listen, die vom Betriebssystem einer vom Automatisierungsgerät umfassten Zentralbaugruppe nur auf Anforderung zusammengestellt werden.

Es wäre also wünschenswert, einen bestimmten Zustand des Automatisierungsgerätes immer wieder reproduzieren zu können, so dass für Wartungstätigkeiten oder bei einer eventuellen Fehlersuche immer wieder von identischen Randbedingungen ausgegangen werden kann. Nachdem die Systemzustandsliste, wie oben erläutert, kein Datensatz im herkömmlichen Sinne ist, der durch einen Zugriff auf einen von dem Automatisierungsgerät umfassten Speicher zugänglich wäre, ist eine Reproduktion bestimmter Zustände im Automatisierungsgerät bisher nur sehr begrenzt möglich.

Aus der EP 1 244 015 A2 ist ein Verfahren zur Duplizierung von Zustandsinformationen bekannt, bei dem ein erstes Gerät Zustandsinformationen in Verbindung mit dem Erhalt einer eingehenden Nachricht aktualisiert, wobei im Zusammenhang damit ein sich auf die vorgenommenen Änderungen beziehender Datensatz an ein weiteres Gerät versandt wird, in dem damit die ursprünglich vorgenommenen Änderungen nachvollzogen werden können. Ein Transfer von Systemzustandsinformationen im eigentlichen Sinne erfolgt damit zu keinem Zeitpunkt, sondern nur ein Transfer von Daten, die eine Veränderung solcher Systemzustandsinformationen nach sich ziehen können. Aus der EP 1 385 070 A2 ist ein Verfahren gemäß dem Oberbegriff des Anspruchs 1 bekannt, wobei dem historische Prozessdaten in einer Echtzeit-Datenbank vorgehalten werden und ggf. einem Automatisierungsgerät zugeführt werden können.

Eine Aufgabe der Erfindung besteht entsprechend darin, diesem Nachteil abzuhelfen oder zumindest dessen Auswirkungen zu reduzieren.

Dazu sind bei einem Verfahren nach dem Oberbegriff des Anspruchs 1 die im kennzeichnenden Teil des Anspruchs 1 angegebenen Maßnahmen vorgesehen.

Durch das Abrufen der Systemzustandsinformation durch das Bediengerät wird diese auf dem Medium, durch das das Bediengerät mit dem Automatisierungsgerät verbunden ist, also z. B. einem Bus, verfügbar. Mittels des Protokollierungswerkzeugs kann die Systemzustandsinformation erfasst und als Mitschrift gespeichert werden. Die Mitschrift repräsentiert also die Systemzustandsinformation und steht zur weiteren Verwendung außerhalb des Automatisierungsgerätes zur Verfügung. Wenn zu einem späteren Zeitpunkt im Automatisierungsgerät ein durch die Mitschrift repräsentierter Systemzustand wieder erzeugt werden soll, wird diese an das Automatisierungsgerät zurück übertragen ("zurückgespielt").

Mittels des Protokollierungswerkzeugs und der damit möglichen Erfassung von Daten, insbesondere Systemzustandsinformationen, die vom Automatisierungsgerät an andere Geräte übertragen werden, lässt sich außerhalb des Automatisierungsgerätes ein Datenbestand aufbauen, der bestimmte Zustände, also Zustände, die zu einem bestimmten Zeitpunkt im Automatisierungsgerät vorgelegen haben, repräsentiert. Je nach Wahl eines Bedieners kann eine einen solchen Zustand repräsentierende Mitschrift an das Automatisierungsgerät zurückgespielt werden, so dass sich dort entsprechend der Mitschrift definierte Zustände einstellen, die den Bediener bei seiner Wartungsaufgabe oder bei einer eventuellen Fehlersuche unterstützen.

Weitere Vorteile und Einzelheiten ergeben sich anhand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn das Protokollierungswerkzeug als Mitschrift der Übertragung eine Kombination dabei übermittelter Telegramme, so wie diese beim Bediengerät kombiniert werden oder kombinierbar sind oder wie diese beim Automatisierungsgerät ursprünglich versandt wurden, zur weiteren Auswertung speichert, steht die Systemzustandsinformation, auch wenn deren Übertragung eine Folge von Telegrammen erfordert, in zusammengefasster Form zur Verfügung. Dies ist insbesondere wesentlich vor dem Hintergrund, dass bei Aufteilung von zu übermittelnden Daten auf mehrere Telegramme nicht gewährleistet ist, dass diese auf Seiten des Empfängers, also z. B. beim Bediengerät, auch in der Reihenfolge eintreffen, in der sie vom Sender, hier also dem Automatisierungsgerät, ursprünglich ausgesandt wurden. Das oben beschriebene Kombinieren umfasst also zumindest auch das Zusammenstellen der bei der Übertragung erfassten Daten in korrekter Reihenfolge.

Bevorzugt ist vorgesehen, dass im Zusammenhang mit dem erfindungsgemäßen Verfahren das Automatisierungsgerät eine Zentraleinheit einer speicherprogrammierbaren Steuerung und die Systemzustandsinformation der Inhalt oder ein Teil des Inhalts einer von der Zentraleinheit generierbaren Systemzustandsliste ist. Eingangs war bereits beschrieben worden, dass gerade der Zugriff auf Systemzustände von speicherprogrammierbaren Steuerungen deshalb erschwert ist, weil diese in zusammengefasster Form erst beim Abruf der für speicherprogrammierbare Steuerungen vorgesehenen Systemzustandsliste zur Verfügung stehen. Gerade bei speicherprogrammierbaren Steuerungen würde also ein Zugriff auf den Speicherinhalt oder bestimmte Teile des Speicherinhaltes nicht ausreichen, um deren Zustand vollständig und in einer für eine Reproduzierbarkeit geeigneten Form zu erfassen.

Weiter bevorzugt ist vorgesehen, dass die Systemzustandsliste Zustandsinformationen nach Art eines Zustandsautomaten umfasst, so dass definierte Zustandsübergänge vorgesehen sein können, die mit dem Ansatz gemäß der Erfindung zu jedem Zeitpunkt erfassbar sind.

Wenn die Mitschrift auch zuvor an das Automatisierungsgerät übermittelte Daten umfasst, z. B. ein bei der Einrichtung des Automatisierungsgerätes übermitteltes Steuerungsprogramm, können auch dadurch begründete Zustände wieder hergestellt werden. Ebenso kann vorgesehen sein, dass die Mitschrift sonstige Daten, z. B. Rezeptdaten oder dergleichen, umfasst, so dass, wenn sich im Laufe der Steuerung oder Überwachung eines technischen Prozesses Änderungen an solchen Daten ergeben, auf vorherige Werte solcher Daten und damit begründete Zustände zurückgegriffen werden kann. Insgesamt kann damit vorgesehen sein, dass die Mitschrift sämtliche Daten umfasst, die vom jeweiligen Bediener zur vollständigen Beschreibung der jeweils interessierenden Zustände als maßgeblich erkannt wurden.

Wenn die Mitschrift auch einen zeitlichen Verlauf von Änderungen der Systemzustandsinformationen umfasst und mit dem Übertragen der Mitschrift an das Automatisierungsgerät korrespondierende Änderungen auf gleicher, verkürzter oder gestreckter Zeitbasis auch dem Automatisierungsgerät, insbesondere dem Steuerungsprogramm oder dem Prozessabbild, eingeprägt werden, lässt sich auch das dynamische Verhalten des Automatisierungsgerätes, insbesondere im Zusammenwirken mit dem technischen Prozess, reproduzieren.

Wenn die Mitschrift im Zusammenhang mit dem Übertragen an das Automatisierungsgerät durch dieses interpretiert wird und aufgrund der Interpretation der Mitschrift durch das Automatisierungsgerät dadurch repräsentierte Zustände dem Automatisierungsgerät, insbesondere dem Steuerungsprogramm oder dem Prozessabbild, eingeprägt werden, ist eine Funktion geschaffen, die verkürzt ausgedrückt ein Schreiben der bisher nur lesbaren Systemzustandsliste ermöglicht.

Die Erfindung ist bevorzugt in Software ausgeführt, so dass die Erfindung auch ein Computerprogramm umfasst, mit dem das vorstehend beschriebene und nachfolgend weiter erläuterte Verfahren implementiert wird. Gleichfalls ist von der Erfindung ein Computerprogrammprodukt, also insbesondere ein Speicher oder dergleichen, mit einem solchen Computerprogramm umfasst.

Schließlich bezieht sich die Erfindung auch auf eine Verwendung des eingangs beschriebenen und nachfolgend weiter erläuterten Verfahrens zur automatischen Erfassung und Reproduktion von Zuständen in dem Automatisierungsgerät.

Nachfolgend wird ein Ausführungsbeispiel der Erfindung anhand der Zeichnung näher erläutert, das nicht als Einschränkung der Erfindung zu verstehen ist. Vielmehr sind im Rahmen der vorliegenden Offenbarung zahlreiche Abänderungen und Modifikationen möglich, insbesondere solche Varianten und Kombinationen, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen. Einander entsprechende Gegenstände oder Elemente sind in allen Figuren mit den gleichen Bezugszeichen versehen.

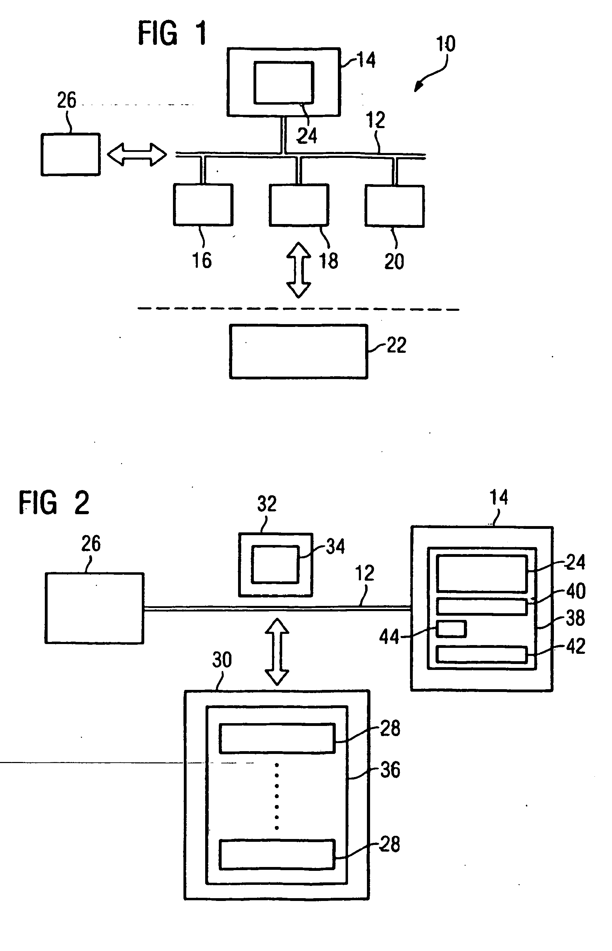

Darin zeigen
- FIG 1: ein Automatisierungssystem zur Steuerung und/oder Überwachung eines technischen Prozesses entsprechend einer für das Automatisierungssystem und den technischen Prozess definierten Automatisierungslösung und
- FIG 2: eine Übertragung eines Steuerungsprogramms von einem ersten zu einem zweiten von dem Automatisierungssystem umfassten Gerät, wobei bei der Übertragung übermittelte Daten von einem Protokollierungswerkzeug erfasst und gespeichert werden, wobei das Protokollierungswerkzeug anhand der erfassten Daten eine Mitschrift des Übertragungsvorgangs erstellt, die bei weiteren Auswertungen zugrunde gelegt werden kann.

FIG 1 zeigt in schematisch vereinfachter Form ein insgesamt mit 10 bezeichnetes Automatisierungssystem, das in der dargestellten Form eine Anzahl von kommunikativ über z. B. einen Bus 12 verbundenen Automatisierungsgeräten 14, 16, 18, 20 umfasst, die zusammen einen ebenfalls nur schematisch dargestellten technischen Prozess 22, z. B. einen Produktionsprozess, wie z. B. die Herstellung eines Automobils oder von Automobilteilen oder die Herstellung von z. B. Arzneimitteln und dergleichen, überwachen und/oder steuern. Zur Steuerung und/oder Überwachung des technischen Prozesses 22 ist dem Automatisierungssystem 10 oder einzelnen Automatisierungsgeräten 14 als Automatisierungslösung ein Steuerungsprogramm 24 zugeordnet, unter dessen Kontrolle bei Ausführung durch dafür vorgesehene Verarbeitungseinheiten innerhalb des Automatisierungssystems 10 dieses im Zusammenwirken mit nicht dargestellten Sensoren und Aktoren die Steuerung und/oder Überwachung des technischen Prozesses 22 übernimmt.

Der Begriff "Automatisierungsgerät" umfasst dabei sämtliche Geräte, Einrichtungen oder Systeme, also neben z. B. Steuerungen, wie speicherprogrammierbaren Steuerungen, Prozessrechnern, (Industrie-) Computern und dergleichen auch Antriebssteuerungen, Frequenzumrichter und Ähnliches, wie sie zur Steuerung, Regelung und/oder Überwachung technologischer Prozesse z. B. zum Umformen oder Transportieren von Material, Energie oder Information etc. eingesetzt werden oder einsetzbar sind, wobei insbesondere über geeignete technische Einrichtungen, wie z. B. Sensoren oder Aktoren, Energie aufgewandt oder gewandelt wird.

Dem Automatisierungssystem 10 ist zumindest zeitweise ein Bediengerät 26 zugeordnet, mit dem ein Zugriff auf das Automatisierungssystem, insbesondere einzelne, davon umfasste Automatisierungsgeräte 14 bis 20, möglich ist.

FIG 2 zeigt in einer anderen Darstellung einen Ausschnitt aus der Darstellung gemäß FIG 1, und zwar eine Datenübertragung von einem der Automatisierungsgeräte 14 bis 20, hier dem Automatisierungsgerät 14, zum Bediengerät 26.

Bei einer Übertragung zwischen Bediengerät 26 und Automatisierungsgerät 14 übermittelte Daten 28 werden von einem Protokollierungswerkzeug 30 erfasst und gespeichert. Das Protokollierungswerkzeug 30 hat dazu in geeigneter Art und Weise Zugriff auf die Datenübertragung zwischen Bediengerät 26 und Automatisierungsgerät 14, etwa indem es in Hardware an den Bus 12 angeschlossen ist oder indem es bei einer Implementation in Software in die Funktionen integriert oder mit solchen Funktionen in geeigneter Form kombiniert ist, die beim Übertragen der Daten 28 verwendet werden. Beide Alternativen sollen in der Darstellung in FIG 2 durch den Doppelpfeil veranschaulicht sein.

Zum Erfassen und Speichern der Daten 28 überwacht das Protokollierungswerkzeug 30 zwischen Automatisierungsgerät 14 und Bediengerät 26 ausgetauschte Telegramme 32. Solche Telegramme 32 werden in an sich bekannter Art und Weise zwischen den an einer Kommunikation jeweils beteiligten Teilnehmern, hier also dem Bediengerät 26 und dem Automatisierungsgerät 14, ausgetauscht. Jedes Telegramm 32 umfasst Nutzdaten 34, die bei der Übertragung vom Bediengerät 26 an das Automatisierungsgerät 14 vom Protokollierungswerkzeug 30 erfasst und als Daten 28 gespeichert werden.

Auch wenn in der bildlichen Darstellung in FIG 2 nur ein Telegramm 32 dargestellt ist, versteht es sich von selbst, dass in jedem Kommunikationsvorgang eine Vielzahl von Telegrammen 32 Verwendung finden kann, wobei die entsprechend dem jeweiligen Kommunikationsvorgang zu übertragenden Daten 28 auf eine Mehrzahl von Telegrammen 32 aufgeteilt sind. Ebenfalls kann über das jeweils verwendete Kommunikationsmedium, hier also z. B. den Bus 12, während eines ersten Kommunikationsvorgangs das Versenden weiterer Telegramme geschehen, die zu Kommunikationsbeziehungen zwischen anderen Kommunikationsteilnehmern oder einer anderen Kommunikationsbeziehung als dem ersten Kommunikationsvorgang zwischen den beschriebenen Kommunikationsteilnehmern, also Bediengerät 26 und Automatisierungsgerät 14, gehören. Das Protokollierungswerkzeug 30 wertet in dieser Hinsicht den Datenstrom, also die Folge von Telegrammen 32, am Kommunikationsmedium aus und übernimmt nur diejenigen Daten 28, die zur Übertragung des Steuerungsprogramms 24 gehören. Im Datenstrom ist grundsätzlich nicht gewährleistet, dass die Reihenfolge der Telegramme 32, die im Rahmen des Kommunikationsvorgangs übermittelt werden, der tatsächlichen Reihenfolge der im Zuge des Kommunikationsvorgangs übermittelten Daten 28 entspricht. Insoweit nimmt das Protokollierungswerkzeug 30 auch quasi eine Sortierung der Daten 28 vor, so dass die bei der Übertragung erfassten Daten 28 in die ursprünglich vorgesehene Reihenfolge gebracht werden können. All dies ist von der Formulierung, wonach das Protokollierungswerkzeug 30 eine "Kombination der übertragenen Daten 28, so wie sie aufgrund der Telegramme 32 beim Automatisierungsgerät 14 kombiniert werden oder kombinierbar sind, vornimmt", umfasst.

Die Summe der bei einer Übertragung erfassten Daten 28 wird im Folgenden als Mitschrift 36 bezeichnet und kann je nach Umfang des Kommunikationsvorgangs eine Vielzahl von Daten 28 umfassen.

Entsprechend dem Szenario, mit dem sich die Erfindung befasst, soll der aktuelle Zustand des Automatisierungsgerätes 14 erfasst und dieser ggf. zu einem späteren Zeitpunkt im Automatisierungsgerät 14 wieder hergestellt werden. Der Zustand eines Automatisierungsgerätes 14 wird maßgeblich durch den Inhalt eines dem Automatisierungsgerät 14 zugeordneten Speichers 38 bestimmt. In dem Speicher 38 ist in an sich bekannter Art und Weise das Steuerungsprogramm 24 abgelegt. Des Weiteren ist in dem Speicher 38 ein so genanntes Prozessabbild 40 abgelegt. Das Prozessabbild 40 repräsentiert Zustände des technischen Prozesses 22 (FIG 1), die unter Kontrolle des Steuerungsprogramms 24 vom technischen Prozess 22 aufgenommen oder an diesen übermittelt werden. Hierfür sind in an sich bekannter Art und Weise nicht dargestellte Sensoren oder Aktoren vorgesehen. Darüber hinaus ist in dem Speicher 38 ein Betriebssystem 42 abgelegt. Dieses bietet in an sich bekannter Art und Weise Grundfunktionalitäten, auf die das Steuerungsprogramm 24 aufsetzen kann.

Unter Kontrolle des Betriebssystems 42 ist auf Seiten des Automatisierungsgerätes 14 als Systemzustandsinformation 44 z. B. eine Systemzustandsliste generierbar. Die Systemzustandsliste beschreibt den aktuellen Zustand des Automatisierungsgerätes 14 oder zumindest einzelne Aspekte des aktuellen Zustands. Der Inhalt der Systemzustandsliste kann durch Auskunftsfunktionen nur gelesen, nicht aber geändert werden. Die Systemzustandsliste umfasst Teillisten in Form von virtuellen Listen, wobei virtuell in diesem Zusammenhang heißt, dass die Teillisten vom Betriebssystem 42 des Automatisierungsgerätes 14 nur auf Anforderung zusammengestellt werden.

Durch Verwendung einer zum Zugriff auf die Systemzustandsinformation 44 vorgesehenen Auskunftsfunktion kann das Bediengerät 26 beim Automatisierungsgerät 14 auf die Systemzustandsinformation 44 zugreifen. Das Automatisierungsgerät 14 übermittelt daraufhin die Systemzustandsinformation 44 an das Bediengerät 26. Dazu wird, wie oben beschrieben, mindestens ein Telegramm 32 verwendet, wobei von der Systemzustandsinformation umfasste Daten 28 in dem oder jedem Telegramm 32 als Nutzdaten 34 transportiert werden. Das Protokollierungswerkzeug 30 erfasst die Übertragung der Systemzustandsinformation 44 und speichert die dabei übermittelten Daten 28 als Mitschrift 36 ab. Die Mitschrift 36 repräsentiert damit die ursprünglich vom Automatisierungsgerät 14 an das Bediengerät 26 übermittelte Zustandsinformation 44. Jede auf diese Weise gewonnene Mitschrift 36 repräsentiert den Zustand des Automatisierungsgerätes 14 zu einem bestimmten Zeitpunkt. Wenn die Mitschrift 36 zurück an das Automatisierungsgerät 14 übertragen wird, wird dabei dem Automatisierungsgerät 14, insbesondere dem dort vorgehaltenen Steuerungsprogramm 24 und/oder dem dort vorgehaltenen Prozessabbild 40, der durch die Mitschrift 36 repräsentierte Zustand eingeprägt.

Das Zurückspielen einer Mitschrift 36 in ein Automatisierungsgerät 14 bis 20 kann unter Kontrolle des Bediengerätes 26 erfolgen, das dazu eine entsprechende Softwareapplikation ausführt, die Zugriff auf das Protokollierungswerkzeug 30 und die oder jede davon erzeugte Mitschrift 36 hat.

Im Zusammenhang mit einer Übertragung einer Mitschrift 36 an das Automatisierungsgerät 14 wird die Mitschrift 36 durch das Automatisierungsgerät 14 interpretiert. Aufgrund der Interpretation der Mitschrift 36 werden dadurch repräsentierte Zustände dem Automatisierungsgerät 14, insbesondere dem Steuerungsprogramm 24 oder dem Prozessabbild 40, eingeprägt. Das Interpretieren einer Mitschrift 36 auf Seiten des Automatisierungsgerätes 14 und das nachfolgende Einprägen von Zuständen aufgrund dieser Interpretation ist eine auf Seiten des Automatisierungsgerätes 14 zusätzlich zu implementierende Funktion, die bevorzugt als Bestandteil des Betriebssystems 42 realisiert ist. Eine zusätzliche Funktion ist in diesem Zusammenhang deshalb erforderlich, weil die Systemzustandsinformation 44 aufgrund ihrer Sensibilität für die korrekte Funktion des Automatisierungsgerätes 14, insbesondere im Hinblick auf eine ununterbrochene Steuerung und/oder Überwachung des jeweiligen technischen Prozesses 22, normalerweise nicht für einen schreibenden Zugriff zur Verfügung steht. Zudem handelt es sich bei der Systemzustandsliste als Systemzustandsinformation 44 um eine auf Anforderung generierte Datenmenge, die einzelne Aspekte des Prozessabbilds 40, Verknüpfungen daraus oder mit dem Steuerungsprogramm 24, Konfigurationsdaten oder Verknüpfungen solcher Konfigurationsdaten mit den vorgenannten Daten etc. umfassen kann. Die von der Systemzustandsinformation 44 umfassten Daten sind also nicht notwendig im Speicher 38 anderweitig verfügbar, können aber durch geeignete Interpretation verfügbar gemacht werden, so dass nach dem Zurückspielen einer Mitschrift 36 für das Automatisierungsgerät 14, insbesondere das dadurch ausgeführte Steuerungsprogramm 24, genau die Situation, also der Zustand, wieder hergestellt ist, die bzw. der bestanden hat, als die Mitschrift 36 durch das Protokollierungswerkzeug 30 aufgezeichnet wurde.

Ausgehend von dieser Lösung gemäß der Erfindung lassen sich weitere vorteilhafte Anwendungsmöglichkeiten implementieren, von denen kursorisch hier nur einige kurz angesprochen werden sollen, nämlich das Zurückspielen einer Mitschrift 36, die neben einer Systemzustandsinformation 44 auch ein Steuerungsprogramm 24 oder Teile eines solchen Steuerungsprogramms 24 umfasst, so dass im Falle einer nach Aufzeichnen der Mitschrift 36 erfolgten Änderung des Steuerungsprogramms 24 auf Seiten des Automatisierungsgerätes 14 auch in Bezug auf das Steuerungsprogramm 24 der ursprüngliche Zustand wieder hergestellt ist. Des Weiteren kann die Mitschrift 36 als Systemzustandsinformation 44 auch auf Seiten des Automatisierungsgerätes 14 erzeugte oder verarbeitete Daten, insbesondere das Prozessabbild 40 oder Teile desselben und/oder das Steuerungsprogramm 24 oder Teile davon, umfassen. Weiter kann das Aufzeichnen der Mitschrift 36 zu bestimmten vorgegebenen oder vorgebbaren Zeitpunkten erfolgen, so dass durch das Zurückspielen solcher Mitschriften 36 auch das dynamische Verhalten des Automatisierungsgerätes 14 reproduzierbar ist und Untersuchungen unterzogen werden kann, etc.

Damit lässt sich die Erfindung kurz wie folgt darstellen: Es wird ein Verfahren zum Betrieb eines Automatisierungsgerätes 14 angegeben, bei dem durch ein externes Gerät, also z. B. das Bediengerät 26, zumindest eine Systeminformation 44 abgerufen und in diesem Zusammenhang an das Bediengerät 26 übertragen wird. Die Systemzustandsinformation wird während der Übertragung von dem Protokollierungswerkzeug 30 erfasst und als Mitschrift 36 der Übertragung gespeichert. Zur Reproduktion eines bestimmten Zustands im Automatisierungsgerät 14 kann dann zu beliebigen Zeitpunkten zumindest die auf die Übertragung der Systemzustandsinformation 44 zurückgehende Mitschrift 36 an das Automatisierungsgerät übertragen werden.

## Patentansprüche

1. Verfahren zum Betrieb eines zur Ausführung eines Steuerungsprogramms (24) zur Steuerung und/oder Überwachung eines technischen Prozesses (22) vorgesehenen Automatisierungsgerätes (14, 16, 18, 20), das während des Verfahrens mit zumindest einem Bediengerät (26) kommunikativ verbunden ist,
- wobei mittels des Bediengeräts (26) zumindest eine Zustandsinformation bei dem Automatisierungsgerät (14, 16, 18, 20) abgerufen und an das Bediengerät (26) übertragen wird,
- wobei zur Reproduktion eines bestimmten Zustands im Automatisierungsgerät (14, 16, 18, 20) eine übertragene Zustandsinformation (44) an das Automatisierungsgerät (14, 16, 18, 20) zurück übertragen wird,
**dadurch gekennzeichnet,**
- **dass** die Zustandsinformation eine Systemzustandsinformation (44) in Bezug auf das Steuerungsprogramm (24) und ein den technischen Prozess (22) repräsentierendes Prozessabbild (40) ist,
- **dass** die Systemzustandsinformation (44) vom Automatisierungsgerät (14, 16, 18, 20) erst im Zusammenhang mit dem Abruf durch das Bediengerät (26) zusammengestellt wird,
- **dass** im Zusammenhang mit der Übertragung zwischen Automatisierungsgerät (14, 16, 18, 20) und Bediengerät (26) übermittelte Telegramme (32) von einem Protokollierungswerkzeug (30) während der Übertragung erfasst und als Mitschrift (36) der Übertragung gespeichert werden und
- **dass** zur Reproduktion des bestimmten Zustands im Automatisierungsgerät (14, 16, 18, 20) zumindest die auf die Übertragung der Systemzustandsinformation (44) zurückgehende Mitschrift (36) an das Automatisierungsgerät (14, 16, 18, 20) übertragen wird.

2. Verfahren nach Anspruch 1, wobei das Protokollierungswerkzeug (30) als Mitschrift (36) der Übertragung eine Kombination der übermittelten Telegramme (32), so wie diese beim Bediengerät (26) kombiniert werden oder kombinierbar sind, zur weiteren Auswertung speichert.

3. Verfahren nach Anspruch 1 oder 2, wobei das Automatisierungsgerät (14, 16, 18, 20) eine Zentraleinheit einer speicherprogrammierbaren Steuerung und die Systemzustandsinformation der Inhalt oder ein Teil des Inhalts einer von der Zentraleinheit generierbaren Systemzustandsliste ist.

4. Verfahren nach Anspruch 3, wobei die Systemzustandsliste Zustandsinformationen nach Art eines Zustandsautomaten umfasst.

5. Verfahren nach einem der vorangehenden Ansprüche, wobei die Mitschrift (36) auch zuvor an das Automatisierungsgerät (14, 16, 18, 20) übermittelte Daten umfasst.

6. Verfahren nach einem der vorangehenden Ansprüche, wobei die Mitschrift (36) auch einen zeitlichen Verlauf von Änderungen der Systemzustandsinformation (44) umfasst und mit dem Übertragen der Mitschrift (36) an das Automatisierungsgerät (14, 16, 18, 20) korrespondierende Änderungen auf gleicher, verkürzter oder gestreckter Zeitbasis auch dem Automatisierungsgerät, insbesondere dem Steuerungsprogramm (24) oder dem Prozessabbild (40), eingeprägt werden.

7. Verfahren nach einem der vorangehenden Ansprüche, wobei die Mitschrift (36) im Zusammenhang mit dem Übertragen an das Automatisierungsgerät (14, 16, 18, 20) durch dieses interpretiert wird und aufgrund der Interpretation der Mitschrift (36) durch das Automatisierungsgerät (14, 16, 18, 20) **dadurch** repräsentierte Zustände dem Automatisierungsgerät, insbesondere dem Steuerungsprogramm (24) oder dem Prozessabbild (40), eingeprägt werden.

8. Computerprogramm mit durch einen Computer ausführbaren Programmcodeanweisungen zur Implementierung des Verfahrens nach einem der Ansprüche 1 bis 7, wenn das Computerprogramm auf einem Computer ausgeführt wird.

9. Computerprogrammprodukt, insbesondere Speichermedium, mit einem durch einen Computer ausführbaren Computerprogramm gemäß Anspruch 8.

10. Verwendung des Verfahrens nach einem der Ansprüche 1 bis 7, zur automatischen Erfassung und Reproduktion von Zuständen in dem Automatisierungsgerät (14, 16, 18, 20).

## Claims

1. Method for operating an automation device (14, 16, 18, 20) provided for execution of a control program (24) for controlling and/or monitoring a technical process (22), which has a communication link during the procedure to at least one operating device (26),
- wherein at least one state information item is called down at the automation device (14, 16, 18, 20) by means of the operating device (26) and transmitted to the operating device (26),
- wherein, for reproduction of a specific state in the automation device (14, 16, 18, 20), a transmitted state information item (44) is transmitted back to the automation device (14, 16, 18, 20),
**characterised in that**
- the state information is a system state information item (44) relating to the control program (24) and is a process image (40) representing the technical process (22),
- the system state information (44) from the automation device (14, 16, 18, 20) is only compiled within the context of call down by the operating device (26),
- telegrams (32) transferred in conjunction with the transmission between automation device (14, 16, 18, 20) and operating device (26) are recorded by a logging tool (30) during transmission and are stored as a journal (36) of the transmission, and
- for reproduction of a specific state in the automation device (14, 16, 18, 20) at least the journal (36) referring back to the transmission of the system state information (44) is transmitted to the automation device (14, 16, 18, 20).

2. Method according to claim 1, with the logging tool (30) storing as a record (36) of the transmission a combination of the transferred telegrams (32), as have been combined or can be combined at the operating device (26) for further analysis.

3. Method according to claim 1 or 2, with the automation device (14, 16, 18, 20) being a central unit of a programmable logic controller and the system state information item being the content or a part of the content of a system state list that can bc generated by the central unit.

4. Method according to claim 3, with the system state list containing state information in the manner of a state machine.

5. Method according to one of the preceding claims, with the record (36) also containing data transferred previously to the automation device (14, 16, 18, 20).

6. Method according to one of the preceding claims, with the record (36) also containing a temporal pattern of changes in the system state information item (44) and changes corresponding to the transmission of the record (36) to the automation device (14, 16, 18, 20) also being applied to the automation device, in particular the control program (24) or process map (40) on an identical, shortened or extended time basis.

7. Method according to one of the preceding claims, with the record (36) being interpreted in conjunction with the transmission to the automation device (14, 16, 18, 20) by said automation device (14, 16, 18, 20) and based on the interpretation of the record (36) by the automation device (14, 16, 18, 20) states thereby represented being applied to the automation device, in particular the control program (24) or process map (40).

8. Computer program with program code instructions that can be executed by a computer to implement the method according to one of clams 1 to 7, when the computer program is executed on a computer.

9. Computer program product, in particular a storage medium, with a computer program according to claim 8 that can be executed by a computer.

10. Use of the method according to one of claims 1 to 7 for the automatic detection and reproduction of states in the automation device (14, 16, 18, 20).

## Revendications

1. Procédé pour faire fonctionner un appareil ( 14, 16, 18, 20 ) d'automatisation prévu pour réaliser un programme ( 24 ) de commande et/ou de contrôle d'un processus ( 22 ) technique, appareil qui, pendant le procédé, est relié de manière à communiquer avec au moins un appareil ( 26 ) de service,
- dans lequel au moyen de l'appareil ( 26 ) de service au moins une information d'état est appelée dans l'appareil ( 14, 16, 18, 20 ) d'automatisation et est transmise à l'appareil de service,
- dans lequel, pour la reproduction d'un état déterminé dans l'appareil (14, 16, 18, 20) d'automatisation, une information ( 44 ) d'état transmise est retransmise à l'appareil ( 14, 16, 18, 20 ) d'automatisation,
**caractérisé**
- **en ce que** l'information d'état est une information ( 44 ) d'information d'état de système se rapportant au programme ( 24 ) de commande et une reproduction ( 40 ) de processus représentant le processus ( 22 ),
- **en ce que** l'information ( 44 ) d'état de système est compilée par l'appareil ( 14, 16, 18, 20 ) d'automatisation seulement en liaison avec l'appel par l'appareil ( 26 ) de service,
- **en ce que** des télégrammes ( 32 ) transmis en liaison avec la transmission entre l'appareil ( 14, 16, 18, 20 ) d'automatisation et l'appareil ( 26 ) de service sont détectés par un outil ( 30 ) d'énumération pendant la transmission et sont mémorisés en tant qu'écrit ( 36 ) d'accompagnement de la transmission et
- **en ce que**, pour la reproduction de l'état déterminé dans l'appareil ( 14, 16, 18, 20 ) d'automatisation, au moins l'écrit ( 36 ) d'accompagnement, retournant à la transmission de l'information ( 44 ) d'état de système, est transmis à l'appareil ( 14, 16, 18, 20 ) d'automatisation.

2. Procédé suivant la revendication 1, dans lequel l'outil ( 30 ) d'énumération mémorise, pour une exploitation supplémentaire, comme écrit ( 36 ) d'accompagnement de la transmission, une combinaison des télégrammes ( 32 ) transmis telle que ceux-ci sont combinés ou peuvent être combinés dans l'appareil ( 26 ) de service.

3. Procédé suivant la revendication 1 ou 2, dans lequel l'appareil ( 14, 16, 18, 20 ) d'automatisation est une unité centrale d'un automate programmable et l'information d'état d'un système est le contenu ou une partie du contenu d'une liste d'état de système pouvant être produite par l'unité centrale.

4. Procédé suivant la revendication 3, dans lequel la liste d'états d'un système comprend des informations d'état à la manière d'un automate fini.

5. Procédé suivant l'une des revendications précédentes, dans lequel l'écrit ( 36 ) d'accompagnement comprend aussi des données transmises auparavant à l'appareil ( 14, 16, 18, 20 ) d'automatisation.

6. Procédé suivant l'une des revendications précédentes, dans lequel l'écrit ( 30 ) d'accompagnement comprend aussi une courbe dans le temps des variations de l'information ( 44 ) d'état d'un système et des variations correspondant à la transmission de l'écrit ( 36 ) d'accompagnement à l'appareil ( 14, 16, 18, 20 ) d'automatisation sont injectées sur une même base de temps, une base de temps écourtée ou une base de temps allongée également à à l'appareil d'automatisation, notamment dans le programme ( 24 ) de commande ou dans la reproduction ( 40 ) du processus.

7. Procédé suivant l'une des revendications précédentes, dans lequel l'écrit ( 30 ) d'accompagnement est, en liaison avec la transmission à l'appareil ( 14, 16, 18, 20 ) d'automatisation, interprété par ce dernier et des états représentés ainsi sur la base de l'interprétation de l'écrit ( 36 ) d'accompagnement par l'appareil ( 14, 16, 18, 20 ) d'automatisation sont injectés dans l'appareil d'automatisation, notamment dans le programme ( 24 ) de commande ou dans la reproduction ( 40 ) de processus.

8. Programme informatique ayant des instructions de code de programme pouvant être réalisées sur un ordinateur pour la mise a en oeuvre du procédé suivant l'une des revendications 1 à 7, lorsque le programme informatique est réalisé sur un ordinateur.

9. Produit de programme informatique, notamment support de mémoire, ayant un programme informatique pouvant être réalisé par un ordinateur suivant la revendication 8.

10. Utilisation du procédé suivant l'une des revendications 1 à 7 pour la détection et la reproduction automatiques d'états dans l'appareil (14, 16, 18, 20) d'automatisation.
